# EUROPEAN PATENT SPECIFICATION

(11) **EP 0 481 145 B1**
(45) Date of publication and mention of the grant of the patent: **18.09.1996**
(21) Application number: 90311784.4
(22) Date of filing: 26.10.1990
(51) Int. Cl.: H04N 1/387, H04N 1/32

(54) **Image communication apparatus**
Bildübertragungsgerät
Dispositif pour la communication d'images

(30) Priority: 08.10.1990 JP 271215/90
(43) Date of publication of application: 22.04.1992
(73) Proprietor: CANON KABUSHIKI KAISHA, Tokyo (JP)
(72) Inventor: Yamaguchi, Yoshinori, Ohta-ku, Tokyo (JP); Sugiura, Kenichiro, Ohta-ku, Tokyo (JP); Yasuda, Masanao, Ohta-ku, Tokyo (JP); Inoue, Naoshi, Ohta-ku, Tokyo (JP); Kobayashi, Hideyuki, Ohta-ku, Tokyo (JP); Murayama, Michihei, Ohta-ku, Tokyo (JP)
(74) Representative: Beresford, Keith Denis Lewis

(56) References cited:
- EP-A- 0 051 292
- PATENT ABSTRACTS OF JAPAN, vol. 15, no. 70 (E-1035), 19th February 1991; & JP-A-2 291 769
- PATENT ABSTRACTS OF JAPAN, vol. 12, no. 451 (P-791)[3298], 28th November 1988; & JP-A-63 173 177

## Description

### BACKGROUND OF THE INVENTION

### Field of the Invention

The present invention relates to an image communication apparatus with function for displaying image information.

### Related Background Art

As such a kind of apparatus, there is already known, for example, a facsimile apparatus, which has become rapidly popular as handy information transmitting means capable of directly printing the received image information.

Also there has already been commercialized a facsimile apparatus capable of storing the image information in an external memory or displaying it on a display unit such as a cathode ray tube instead of direct printing, such as a facsimile system utilizing a personal computer. Such facsimile apparatus will hereafter be called as software facsimile apparatus.

In the usual facsimile apparatus, an image eventually sent upside down does not cause a significant problem, since the received image is always printed on paper.

However, in the software facsimile apparatus explained above, since the received image is viewed on a display unit, an upside-down image is very difficult to observe and has eventually to be printed on paper. EP-A-0051292 discloses a display device which rotates an input image in units of 90° and then displays the rotated image. JP-A-63173177 discloses an apparatus which rotates an image received by facsimile and then displays the rotated image. In this prior art, the image is rotated in its entirety.

According to the present invention, there is provided a facsimile apparatus comprising: receiving means for receiving a facsimile transmission from a calling station, the facsimile transmission comprising image information divided into a calling station information area containing information about the calling station and a transmitted information area containing the information transmitted by a user of the calling station, and processing means for rotating image information, characterised in that the processing means is operable to rotate only image information in the transmitted information area when image information in the transmitted information area and the calling station information area of the facsimile transmission have different orientations and then to process the calling station information and the rotated transmitted information as a single image.

Consequently, the present invention is concerned with the problem of enabling a recipient of a facsimile message to read all of the facsimile message easily. To this end, the present invention provides a facsimile apparatus having processing means which operate to rotate only image information in a user transmitted information area of a facsimile message when image information in the user transmitted information area and a calling station information area of the facsimile transmission have different orientations. This enables the recipient of a facsimile message to read easily both the information regarding the calling station and the actual message transmitted by the user of the calling station even when the user of the calling station accidently transmits a page in an inverted state that is with the bottom of the page being transmitted first, so that the transmitted message is at a different orientation than the calling station information. The present invention has particular advantages where the facsimile apparatus displays a received message on a display device because it enables the transmitted message to be oriented in the same direction as the calling station information, so allowing the transmitted message to be read directly from a display device of the apparatus. The present invention is also advantageous in apparatus where the facsimile message is printed out because it enables the transmitted message to be correctly oriented with respect to the calling station information so that the printed message does not have to be rotated one or more times to enable easy reading of all of its contents.

Embodiments of the present invention will now be described, by way of example, with reference to the accompanying drawings, in which:
Fig. 1 is a block diagram of a facsimile apparatus constituting an embodiment of the present invention;
Fig. 2 is a view showing file format employed in case the received image information is stored in an external memory in said embodiment;
Fig. 3 is a flow chart of a main routine of vertical inverting process in said embodiment;
Fig. 4 is a flow chart of an operation for copying a non-inverted page in a new file in said embodiment;
Fig. 5 is a flow chart of an operation for copying a vertically inverted page in a new file in said embodiment;
Fig. 6 is a flow chart of a main routine of vertical inverting process in a second embodiment;
Fig. 7 is a flow chart of an operation for displaying a non-inverted page on a cathode ray tube in said second embodiment;
Fig. 8 is a flow chart of an operation for displaying a vertically inverted page on a cathode ray tube in said second embodiment;
Fig. 9 is a schematic view showing the principle of process in Fig. 7;
Fig. 10 is a schematic view showing the principle of process in Fig. 8;
Fig. 11 is a flow chart showing the outline of function in a third embodiment of the present invention; and
Fig. 12 is a flow chart for a process of vertical inversion or lateral rotation by 90° in a rectangular area in said third embodiment.

### DETAILED DESCRIPTION OF THE PREFERRED EMBODIMENTS

In the following there will be explained an embodiment of the present invention in detail, with reference to the attached drawings.

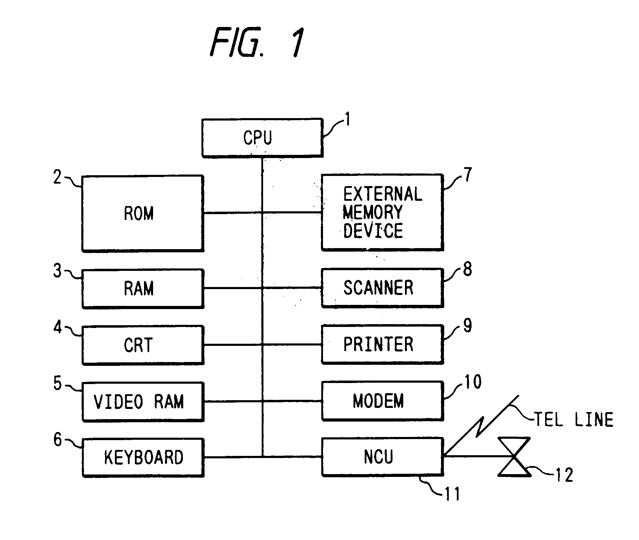

Fig. 1 is a block diagram of a first embodiment of the present invention applied to a facsimile apparatus.

The facsimile apparatus of the present embodiment is constructed as a software facsimile apparatus, and is provided with a central processing unit (CPU) 1 composed of a microcomputer and serving to control the entire apparatus; a read-only memory (ROM) 2 storing the control programs of said CPU 1; and a random access memory (RAM) 3 storing various data and programs.

Said facsimile apparatus is further provided with a cathode ray tube (CTR) 4 serving as a display unit; a video RAM 5 for said CRT 4; a keyboard 6 for entering various signals; an external memory 7 for storing the received image information; an image scanner 8 for reading an original image; a printer 9 for printing the received image information; a modem 10; a network control unit (NCU) 11; and a telephone set 12.

In said facsimile apparatus, the image information received through a telephone line is either directly printed by the printer 9, or stored in the external memory 7, according to a mode selected by the keyboard 6.

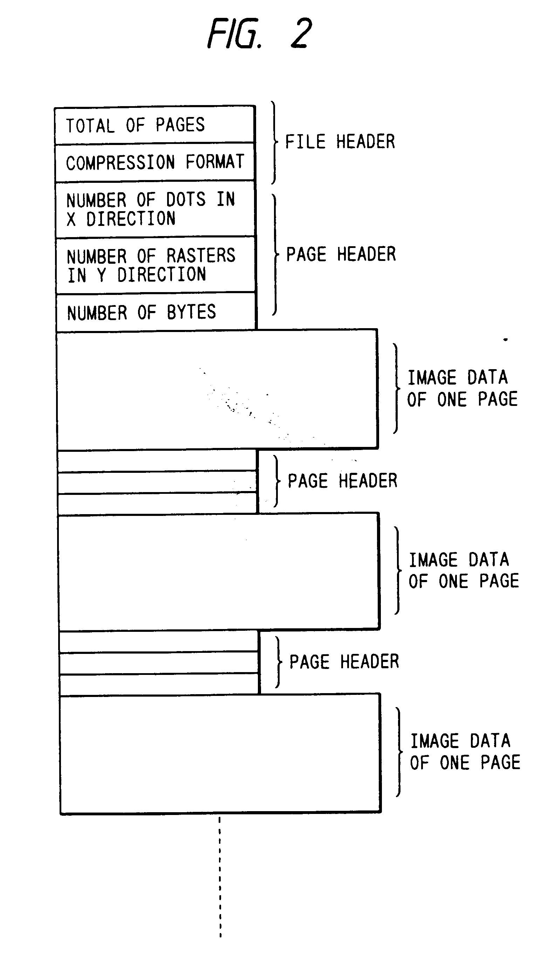

Fig. 2 is a schematic view of the file format in case said received image information is stored in the external memory 7.

At the start of each file stored in the external memory 7 there is provided a file header, storing data on the number of pages of said file and the method of compression. Though there are known various types of compression, such as MH (modified Huffman) method or MMR (modified modified Read) method, the storage of uncompressed original image data will be explained in the present embodiment, for the purpose of simplicity.

At the start of each page in each of the above-mentioned files, there is provided a page header storing data on the number of dots in the x-direction of the image, the number of rasters in the y-direction, and the number of bytes in a page.

In this facsimile apparatus, the operator can cause each page of the file stored in the external memory 7 to be displayed on the CRT 4, and, upon finding a vertically inverted page, can effect a vertical inverting process or an inversion control of a sender ID through the operation of the keyboard 6.

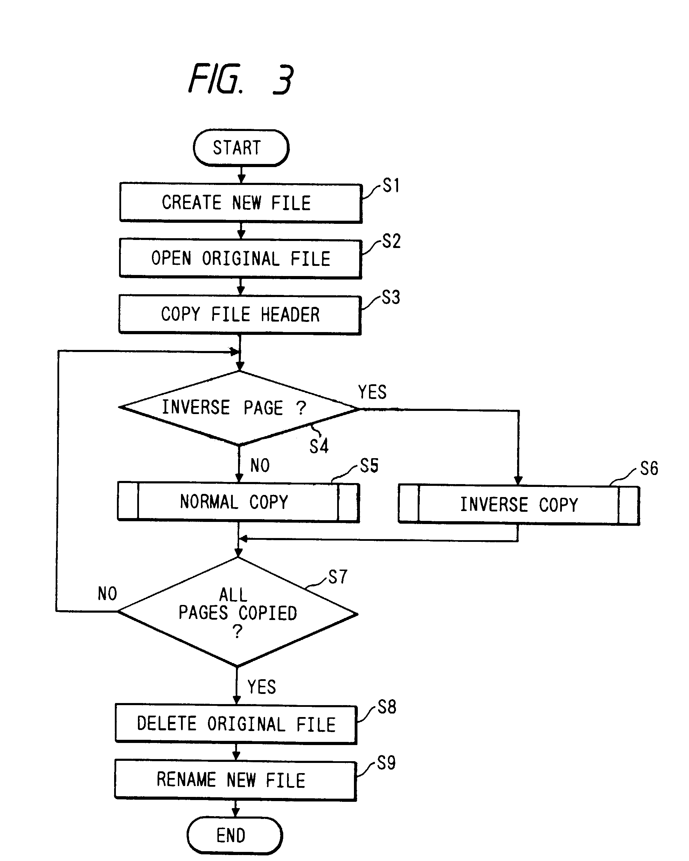

Fig. 3 is a flow chart showing the main routine of such vertically inverting process.

At first a new file is created (step S1), then the original file including a vertically inverted page is opened for enabling rewriting (step S2), and the file header of said original file is copied without change (step S3).

Then the pages of the file are displayed in succession. The operator observes the display of each page, and enters a copy command if the displayed page is not vertically inverted, or an inverted copy command if the displayed page is vertically inverted. The CPU 1 discriminates a copy command or an inverted command (step S4), and copies the image without change into the new file in case of a copy command (step S5), or stores an inverted image into the new file in case of an inverted copy command (step S6).

When all the pages are copied in this manner (step S7), the original file is deleted (step S8), and the above-mentioned new file is renamed to read as the same as the original file (step S9).

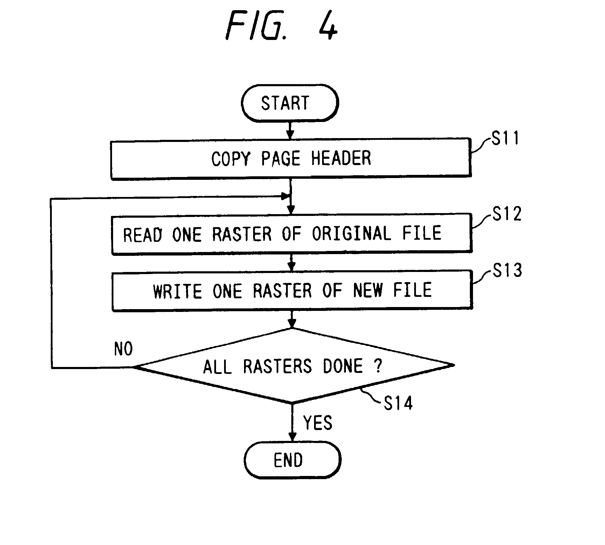

Fig. 4 is a flow chart showing the process of copying a non-inverted page into the new file.

At first the page header is copied (step S11), then a raster of the original file is read (step S12) and written as a raster in the new file (step S13). When all the rasters are read and written in this manner (step S14), the sequence proceeds to a next page.

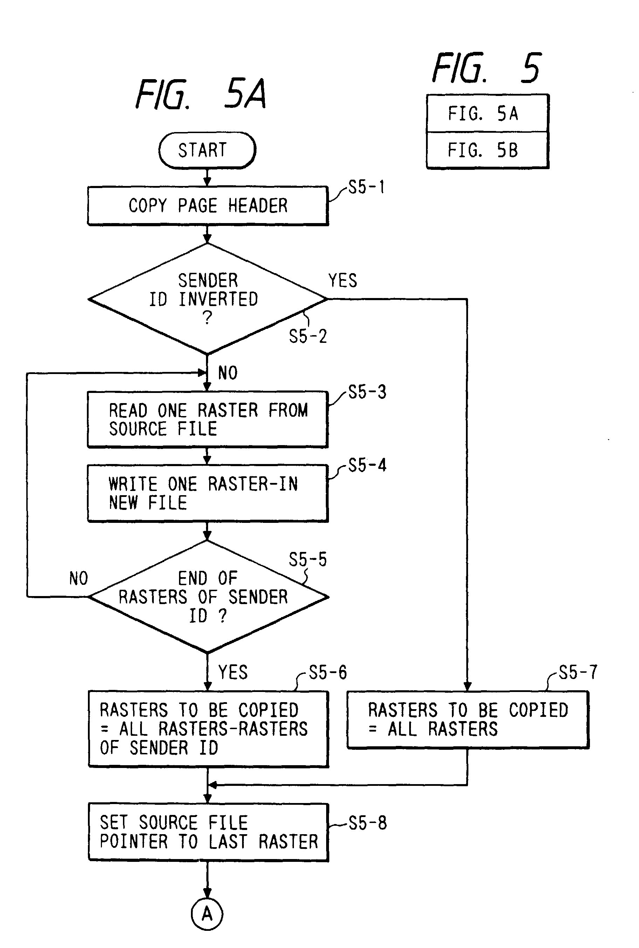

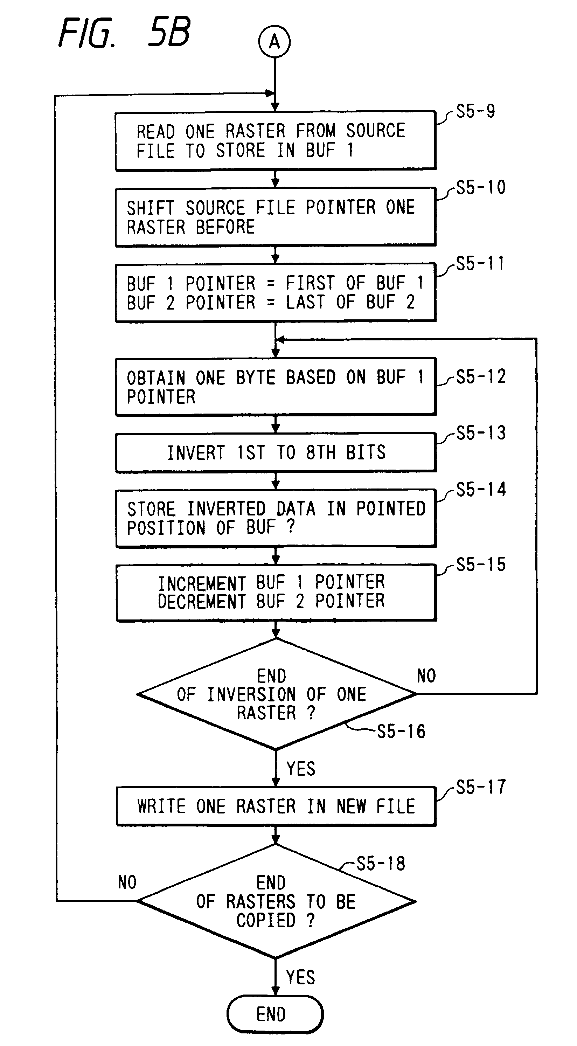

Fig. 5 is a flow chart showing the process of copying, with vertical inversion, an inverted page into the new file.

In the flow chart of Fig. 5, all of the vertically inverted pages are inverted. But, header information such as a sender ID automatically added at a sender end is not inverted (i.e. normal) in general even in such vertically inverted page. So, it may be preferable that the header information is not inverted while parts vertically inverted of the page are inverted.

In reference to Fig. 5, at first a page header is copied (step S5-1) and it is checked whether a sender ID is inverted or not (step S5-2). If not, one raster line is read from a source file (step S5-3) and is written as one raster line of a new file (step S5-4). Thereafter, this process is repeated at the number of times corresponding to the raster lines of the sender ID (step S5-5), the remainder obtained by subtracting the raster line number of the sender ID from all the raster lines set as the value of raster lines to be copied used in the next process (step S5-6). If the sender ID also is inverted, the number of all the raster lines is set as the value of the copying raster (step S5-7). Then a source file pointer is set to the last raster line (step S5-8). One raster line is read from a pointed position of the source file and stored in a buffer (referred to as BUF 1) of RAM 3 (step 55-9). After the source file pointer is shifted one raster line before (step S5-10), a bit inversion process is executed.

A BUF 1 pointer is set to the head of BUF 1, and a pointer of a buffer (referred to as BUF 2) for storing therein raster bit-inverted sideward (or right and left) is set to the last of BUF 2 (step 55-11). One byte is obtained based on the pointer of BUF 1 (step S5-12) and the first- to the eighth- bits of the one byte are inverted (step S5-13) and stored in a pointed position of BUF 2 (step S5-14). Then the BUF 1 pointer is incremented and the BUF 2 pointer is decremented (step S5-15). The sideward inversion is repeated by one raster line (step S5-16) and then the inverted raster line is written as one raster line of a new file (step S5-17). When rasters to be copied have been read and written (step S5-18), the next page is to be copied.

In the present embodiment, since the storage is conducted with the uncompressed original data, the number of bytes in a page remains unchanged after the inversion of the page. However, in case compressed data are employed, the number of bytes in a page may vary by data compression after inversion. In such case the content of the page header is changed after the copying of the page.

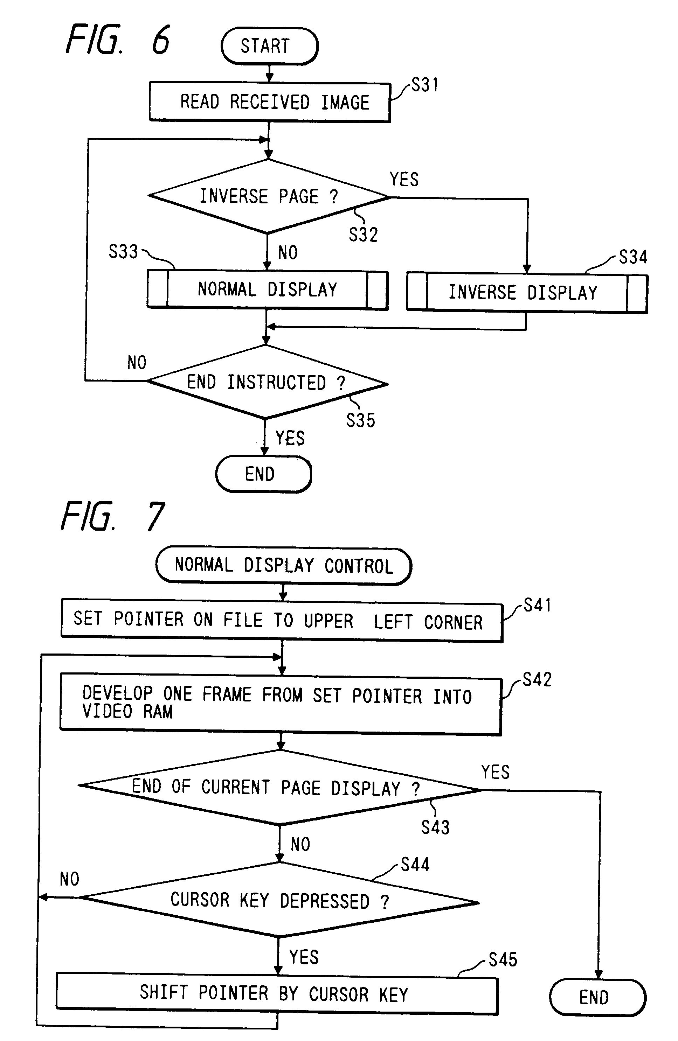

Figs. 6 to 8 are flow charts showing the operations in a second embodiment of the present invention.

In this embodiment, an inverted page is stored, after inversion, in the video RAM 5, and the content of said video RAM 5 is displayed on the CRT 4. The hardware structure and the file format are same as those shown in Figs. 1 and 2.

Referring to Fig. 6, a desired file to be displayed on the CRT 4 is read out from the external memory 7 (step S31). The pages of said file are displayed on the CRT 4 in succession (steps S32, S33). If there is an inverted page (step S32), a command is entered from the keyboard 6 to develop said page, with vertical inversion, on the video RAM 5, and the content of said video RAM 5 is displayed on the CRT 4 (step S34). The sequence is terminated in response to the entry of an end command from the keyboard 6 after the display of necessary images (step S35).

Fig. 7 is a flow chart showing a normal display process in the step S33 mentioned above.

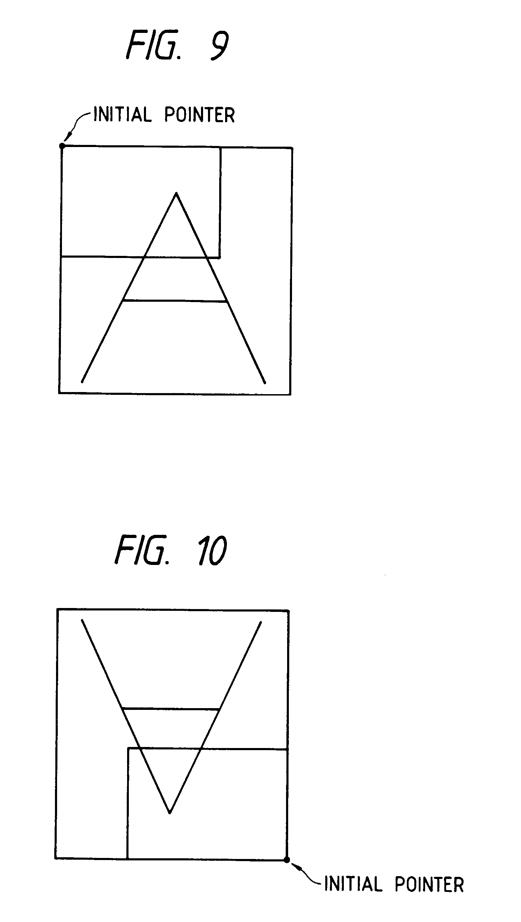

At first the pointer on the file is set at the upper left corner of the page as shown in Fig. 9 (step S41), and an image frame starting from said pointer is developed on the video RAM 5 (step S42). Then the image developed on said video RAM 5 is displayed on the CRT 4. If the operator wishes to terminate the display of the page, a command is entered from the keyboard 6, thereby terminating the sequence (step S43). Otherwise, the display is maintained unless the cursor key is depressed (step S44). If the operator wishes to move the display, the cursor key is depressed to move the pointer (step S45), whereby the sequence returns to the step S42 for developing the image on the video RAM 5 anew.

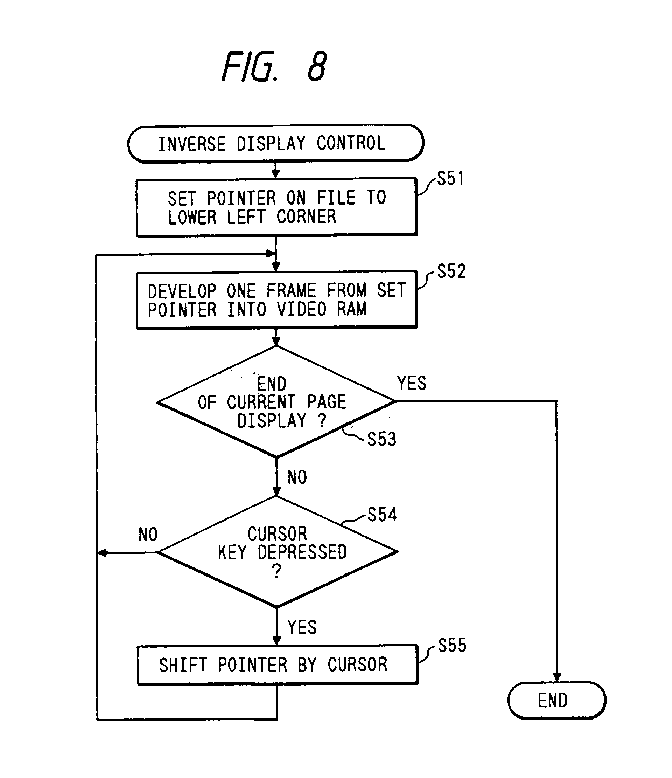

Fig. 8 is a flow chart showing an inverted display process in the step S34 mentioned above.

In this case, the pointer on the file is set at the lower right corner of the page as shown in Fig. 10 (step S51), and an image frame is developed on the video RAM 5, raster by raster, from the lower right corner to the upper left corner (step S52). If the cursor key is depressed (step S54), the pointer is moved in a direction opposite to that of the cursor key (step S55), and the sequence returns to the step S52 for developing the image on the video RAM 5 anew.

As explained above, in the vertically inverted page, the initial setting of the pointer is made at the lower right corner of the page, and said pointer is moved in a direction opposite to that of the cursor key, whereby the image can be handled in the usual manner on the display.

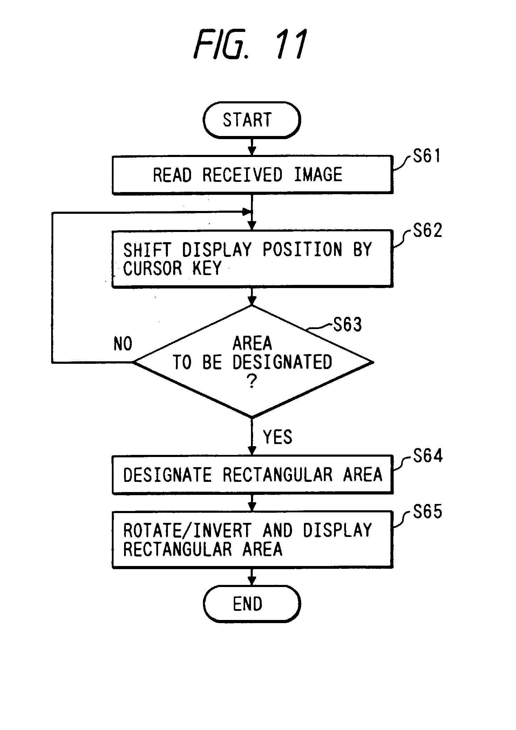

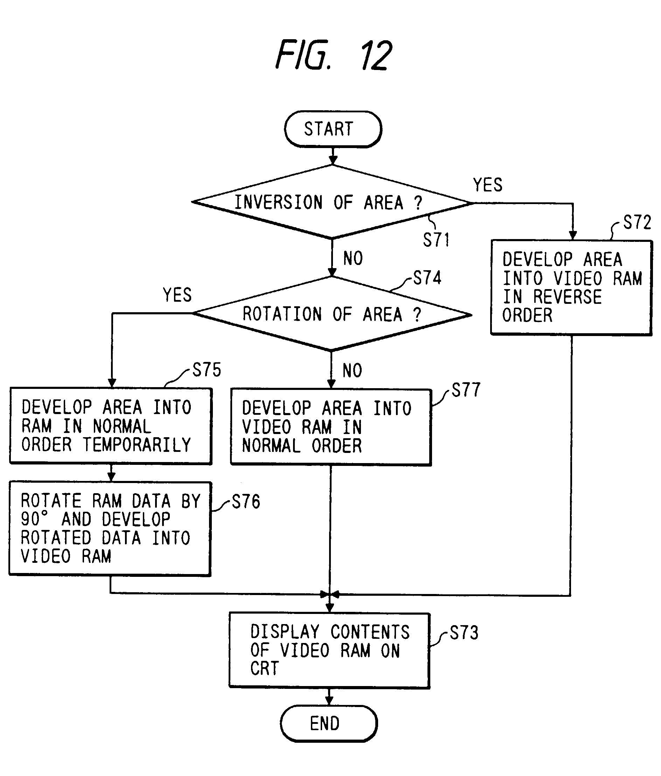

Figs. 11 and 12 are flow charts showing the functions of a third embodiment of the present invention.

This embodiment is capable, in an original image containing plural areas which are inverted or laterally rotated, of obtaining a display in which said areas are properly aligned with other areas, by designating such inverted or 90° rotated areas with arbitrary rectangles and inverting or rotating such areas by 90°. The hardware structure and the file format of this embodiment are same as those shown in Figs. 1 and 2.

Referring to Fig. 11, a file to be displayed on the CRT 4 is read from the external memory 7 and developed on the video RAM 5, and thus developed image is displayed on the CRT 4 (step S61). The operator moves the display position by observing the display and actuating the cursor key (step S62). If the display requires vertical inversion or 90° rotation (step S63), a rectangular area is designated by two diagonal points thereof indicated by the cursor (step S64). For the purpose of simplicity, in the present embodiment, said rectangular area is assumed to be of a size accommodatable in the image frame and of a square shape having same number of dots in the vertical and horizontal directions. Then the image of said rectangular area is displayed, after vertical inversion or 90° rotation, on the CRT 4 (step S65).

Fig. 12 is a flow chart showing the process of vertical inversion or 90° rotation of the rectangular area in the step S65 mentioned above.

At first, in case of the vertical inversion of a rectangular area (step S71), said rectangular area is developed on the video RAM 5 in a sequence opposite to the ordinary sequence (step S72), and is displayed on the CRT 4 (step S73).

In case of rotating the rectangular area to right or left by 90° (step S74), said rectangular area is developed in the ordinary manner on the RAM 3 (step S75), then the data on said RAM 3 are developed, with rotation to right or left by 90°, on the video RAM 5 (step S76) and then are displayed on the CRT 4 (step S73).

If the rectangular area is not inverted nor rotated to left or right, it is developed on the video RAM 5 (step S77) and displayed on the CRT 4 (step S73).

In the present embodiment, since the designated area is square with a same number of dots in the vertical and horizontal directions, the image after rotation can be easily fitted in the original area. However, it is also possible to process a rectangular area by designating two or more areas and rotating each area by 90°.

The above-explained embodiment allows, even when a vertically inverted image exists in the received image information, to display such image in an easily observable state by inversion.

## Claims

1. A facsimile apparatus comprising: receiving means (11) for receiving a facsimile transmission from a calling station, the facsimile transmission comprising image information divided into a calling station information area containing information about the calling station and a transmitted information area containing the information transmitted by a user of the calling station, and processing means (1,2,3,5) for rotating image information, characterised in that the processing means (1 to 5) is operable to rotate only image information in the transmitted information area when image information in the transmitted information area and the calling station information area of the facsimile transmission have different orientations and then to process the calling station information and the rotated transmitted information as a single image.

2. Apparatus according to claim 1, wherein the processing means is operable to rotate image information by 180°, thereby inverting the image information so that the image information in the calling station area and the transmitted information area have the same orientation even when the information area containing the information transmitted by said user is transmitted upside down at the calling station.

3. Apparatus according to claim 1 or 2, wherein the processing means (1 to 5) is operable to display the calling station information and the rotated transmitted information as a single image.

4. Apparatus according to claim 2, wherein the processing means (1 to 5) is operable to rotate the calling station information as well as transmitted information by 180° when both the calling station information and the transmitted information of the facsimile transmission are displayed upside down, and then to display the rotated image.

5. Apparatus according to claim 3 or 4, wherein the processing means is adapted to invert whole pages of transmitted information displayed page by page by the processing means.

6. Apparatus according to claim 1, wherein the processing means (1,2,3,5) is operable to cause transmitted information stored in memory means (7) to be displayed as a page at a time and the apparatus comprises user input means (6) for inputting to the processing means a command to copy a displayed page without change into a new file of said memory means (7) or for inputting to the processing means a command to rotate at least part of a displayed page of said transmitted information before storing the page of said transmitted information in the new file.

7. Apparatus according to claim 5 or 6, further comprising cursor key control means for causing a page of displayed transmitted information inverted by the processing means (1 to 5) to be scrolled in the same direction as a page of information which has not been inverted in response to a user operating a cursor key to cause image scrolling.

8. Apparatus according to claim 1, further comprising area designation means for enabling a user to select an area of a displayed page, the processing means being operable to rotate the image information in the selected area of a display page.

9. Apparatus according to claim 8, wherein the processing means is operable to rotate the image information in the selected area by 90° to the left or the right or by 180°.

10. A method of processing a facsimile transmission received from a calling station, the facsimile transmission comprising image information divided into a calling station area containing information about the calling station and a transmitted information area containing information transmitted by a user of the calling station, which method comprises rotating only image information in the transmitted information area when the image information in the transmitted information area and the calling station information area of the received facsimile transmission have different orientations and processing the calling station information and the rotated transmitted information as a single image.

11. A method according to claim 10, which comprises rotating image information by 180°, thereby inverting the image information so that the image information in the calling station area and the transmitted information area have the same orientation even when the information area containing the information transmitted by said user is transmitted upside down at the calling station.

12. A method according to claim 10 or 11, which comprises displaying the calling station information and the rotated transmitted information as a single image.

13. A method according to claim 11, which comprises rotating the calling station information as well as transmitted information by 180° when both the calling station information and the transmitted information of the facsimile transmission are displayed upside down and then displaying the rotated image.

14. A method according to claim 10, which comprises causing transmitted information stored in memory means (7) to be displayed as a page at a time and causing a displayed page to be copied without change into a new file of said memory means (7) in response to a copy command or causing at least part of a displayed page of transmitted information be inverted before storing the page of said transmitted information in the new file in response to an inverted copy command.

15. A method according to claim 10, further comprising selecting an area of a displayed page and rotating the image information in the selected area of a displayed page.

## Patentansprüche

1. Faksimile-Vorrichtung, mit:
einer Empfangseinrichtung (11) zum Empfang einer Faksimile-Übertragung von einer rufenden Station, wobei die Faksimile-Übertragung Bildinformationen enthält, die in einen Informationen über die rufende Station beinhaltenden Rufstation-Informations-Bereich und einen Übertragungsinformations-Bereich unterteilt sind, der von einem Benutzer der rufenden Station übertragene Informationen enthält, und
eine Verarbeitungseinrichtung (1, 2, 3, 5) zum Drehen von Bildinformationen,
**dadurch gekennzeichnet, daß**
die Verarbeitungseinrichtung (1 bis 5) nur Bildinformationen in dem Übertragungsinformations-Bereich drehen kann, wenn Bildinformationen in dem Übertragungsinformations-Bereich und dem Rufstation-Informations-Bereich der Faksimile-Übertragung voneinander verschiedene Orientierungen besitzen, und dann die Rufstation-Informationen und die gedrehten übertragenen Informationen als einzelnes Bild verarbeiten kann.

2. Vorrichtung nach Anspruch 1, **dadurch gekennzeichnet, daß** die Verarbeitungseinrichtung Bildinformationen um 180° drehen kann, wodurch die Bildinformationen umgekehrt werden, so daß die Bildinformationen in dem Rufstation-Bereich und dem Übertragungsinformations-Bereich selbst dann die gleiche Orientierung besitzen, wenn der die von dem Benutzer übertragenen Informationen enthaltende Informations-Bereich bei der rufenden Station auf dem Kopf stehend übertragen wird.

3. Vorrichtung nach Anspruch 1 oder 2, **dadurch gekennzeichnet, daß** die Verarbeitungseinrichtung (1 bis 5) die Rufstation-Informationen und die gedrehten übertragenen Informationen als einzelnes Bild anzeigen kann.

4. Vorrichtung nach Anspruch 2, **dadurch gekennzeichnet, daß** die Verarbeitungseinrichtung (1 bis 5) sowohl die Rufstation-Informationen als auch übertragene Informationen um 180° drehen kann, wenn sowohl die Rufstation-Informationen als auch die übertragenen Informationen der Faksimile-Übertragung auf dem Kopf stehend angezeigt werden, und dann das gedrehte Bild anzeigen kann.

5. Vorrichtung nach Anspruch 3 oder 4, **dadurch gekennzeichnet, daß**
die Verarbeitungseinrichtung ganze Seiten übertragener Informationen umkehren kann, die durch die Verarbeitungseinrichtung seitenweise angezeigt werden.

6. Vorrichtung nach Anspruch 1, **dadurch gekennzeichnet, daß** die Verarbeitungseinrichtung (1, 2, 3, 5) ein seitenweises Anzeigen von in einer Speichereinrichtung (7) gespeicherten übertragenen Informationen bewirken kann, und die Vorrichtung eine Benutzereingabeeinrichtung (6) zur Eingabe eines Befehls in die Verarbeitungseinrichtung, um eine angezeigte Seite ohne Änderung in eine neue Datei der Speichereinrichtung (7) zu kopieren, oder zur Eingabe eines Befehls in die Verarbeitungseinrichtung aufweist, um zumindest einen Teil einer angezeigten Seite der übertragenen Informationen zu drehen, bevor die Seite der übertragenen Informationen in der neuen Datei gespeichert wird.

7. Vorrichtung nach Anspruch 5 oder 6, **gekennzeichnet durch**
eine Cursortasten-Steuereinrichtung, um auf die Bedienung einer Cursortaste durch einen Benutzer zum Bewirken eines Bilddurchlaufs hin eine durch die Verarbeitungseinrichtung (1 bis 5) umgekehrte Seite angezeigter übertragener Informationen in der gleichen Richtung wie eine Seite von Informationen durchlaufen zu lassen, die nicht umgekehrt wurde.

8. Vorrichtung nach Anspruch 1, **gekennzeichnet durch**
eine Bereichs-Bestimmungseinrichtung, um einem Benutzer die Auswahl eines Bereichs einer angezeigten Seite zu ermöglichen, wobei die Verarbeitungseinrichtung die Bildinformationen in dem ausgewählten Bereich einer angezeigten Seite drehen kann.

9. Vorrichtung nach Anspruch 8, **dadurch gekennzeichnet, daß** die Verarbeitungseinrichtung die Bildinformationen in dem ausgewählten Bereich um 90° nach links oder nach rechts oder um 180° drehen kann.

10. Verfahren zur Verarbeitung einer von einer rufenden Station empfangenen Faksimile-Übertragung, wobei die Faksimile-Übertragung Bildinformationen enthält, die in einen Informationen über die rufende Station beinhaltenden Rufstation-Bereich und einen Übertragungsinformations-Bereich unterteilt sind, der von einem Benutzer der rufenden Station übertragene Informationen enthält, mit den Schritten:
Drehen nur von Bildinformationen in dem Übertragungsinformations-Bereich, wenn die Bildinformationen in dem Übertragungsinformations-Bereich und dem Rufstation-Informations-Bereich der empfangenen Faksimile-Übertragung voneinander verschiedene Orientierungen haben, und
Verarbeiten der Rufstation-Informationen und der gedrehten übertragenen Informationen als einzelnes Bild.

11. Verfahren nach Anspruch 10, mit dem Schritt:
Drehen von Bildinformationen um 180°, wodurch die Bildinformationen umgekehrt werden, so daß die Bildinformationen in dem Rufstation-Bereich und dem Übertragungsinformations-Bereich selbst dann die gleiche Orientierung besitzen, wenn der die von dem Benutzer übertragenen Informationen enthaltende Informations-Bereich bei der Rufstation auf dem Kopf stehend übertragen wird.

12. Verfahren nach Anspruch 10 oder 11, mit dem Schritt:
Anzeigen der Rufstation-Informationen und der gedrehten übertragenen Informationen als einzelnes Bild.

13. Verfahren nach Anspruch 11, mit den Schritten:
Drehen sowohl der Rufstation-Informationen als auch der übertragenen Informationen um 180°, wenn sowohl die Rufstation-Informationen als auch die übertragenen Informationen der Faksimile-Übertragung auf dem Kopf stehend angezeigt werden, und daraufhin
Anzeigen des gedrehten Bildes.

14. Verfahren nach Anspruch 10, mit den Schritten:
Bewirken eines seitenweisen Anzeigens von in einer Speichereinrichtung (7) gespeicherten übertragenen Informationen und
Bewirken eines Kopierens einer angezeigten Seite ohne Änderung in eine neue Datei der Speichereinrichtung (7) auf einen Kopierbefehl hin, oder
Bewirken einer Umkehrung zumindest eines Teils einer angezeigten Seite übertragener Informationen vor dem Speichern der Seite der übertragenen Informationen in die neue Datei auf einen Umkehrungs-Kopierbefehl hin.

15. Verfahren nach Anspruch 10, mit den Schritten:
Auswählen eines Bereichs einer angezeigten Seite und
Drehen der Bildinformationen in dem ausgewählten Bereich einer angezeigten Seite.

## Revendications

1. Appareil de télécopie comprenant: un moyen de réception (11) pour recevoir une transmission de télécopie en provenance d'un poste d'appel, la transmission de télécopie comprenant une information d'image divisée en une zone d'information de poste d'appel, contenant une information concernant le poste d'appel, et une zone d'information transmise, contenant l'information transmise par un utilisateur du poste d'appel, et des moyens de traitement (1, 2, 3, 5) pour faire tourner l'information d'image, caractérisé en ce que les moyens de traitement (1 à 5) peuvent fonctionner pour faire tourner uniquement l'information d'image dans la zone d'information transmise lorsque les informations d'image dans la zone d'information transmise et dans la zone d'information du poste d'appel de la transmission de télécopie ont des orientations différentes, puis pour traiter l'information concernant le poste d'appel et l'information transmise qui a tourné, sous la forme d'une seule image.

2. Appareil selon la revendication 1, dans lequel les moyens de traitement peuvent fonctionner pour faire tourner l'information d'image de 180°, afin d'inverser l'information d'image de telle sorte que les informations d'image dans la zone du poste d'appel et dans la zone d'information transmise, ont la même orientation, même lorsque la zone d'information contenant l'information transmise par ledit utilisateur est transmise en sens inverse au niveau du poste d'appel.

3. Appareil selon la revendication 1 ou 2, dans lequel les moyens de traitement (1 à 5) peuvent fonctionner pour afficher l'information concernant le poste d'appel et l'information transmise qui a tourné, sous la forme d'une seule image.

4. Appareil selon la revendication 2, dans lequel les moyens de traitement (1 à 5) peuvent fonctionner pour faire tourner l'information concernant le poste d'appel, ainsi que l'information transmise, de 180°, lorsqu'à la fois l'information concernant le poste d'appel et l'information transmise de la transmission de télécopie sont affichées en sens inverse, puis pour afficher l'image qui a tourné.

5. Appareil selon la revendication 3 ou 4, dans lequel les moyens de traitement sont aptes à inverser la totalité des pages de l'information transmise, affichée page par page, par les moyens de traitement.

6. Appareil selon la revendication 1, dans lequel les moyens de traitement (1, 2, 3, 5) peuvent fonctionner pour conduire l'information transmise, stockée dans un moyen (7) formant mémoire, à être affichée sous la forme d'une page à un certain instant et l'appareil comporte un moyen (6) d'introduction par l'utilisateur pour introduire une commande dans les moyens de traitement, afin de copier une page affichée sans modification dans un nouveau fichier dudit moyen (7) formant mémoire, ou pour introduire une commande dans les moyens de traitement, pour faire tourner au moins une partie d'une page affichée de ladite information transmise, avant le stockage de la page de ladite information transmise dans le nouveau fichier.

7. Appareil selon la revendication 5 ou 6, comprenant en outre un moyen de commande par touche à curseur pour conduire une page d'information transmise affichée, inversée par les moyens de traitement (1 à 5), à défiler dans la même direction qu'une page d'information qui n'a pas été inversée, en réponse à l'actionnement par l'utilisateur d'une touche à curseur pour conduire à un défilement de l'image.

8. Appareil selon la revendication 1, comprenant en outre un moyen de désignation de zone pour permettre à un utilisateur de sélectionner une zone d'une page affichée, les moyens de traitement pouvant fonctionner pour faire tourner l'information d'image dans la zone sélectionnée d'une page d'affichage.

9. Appareil selon la revendication 8, dans lequel les moyens de traitement peuvent fonctionner pour faire tourner l'information d'image dans la zone sélectionnée de 90°, vers la gauche ou vers la droite, ou de 180°.

10. Procédé de traitement d'une transmission de télécopie reçue en provenance d'un poste d'appel, la transmission de télécopie comprenant une information d'image divisée en une zone de poste d'appel, contenant une information concernant le poste d'appel, et une zone d'information transmise, contenant l'information transmise par un utilisateur du poste d'appel, ce procédé comprenant la rotation, uniquement de l'information d'image dans la zone d'information transmise lorsque les informations d'image dans la zone d'information transmise et dans la zone d'information de poste d'appel de la transmission de télécopie reçue ont des orientations différentes, et le traitement de l'information concernant le poste d'appel et de l'information transmise qui a tourné, sous la forme d'une seule image.

11. Procédé selon la revendication 10, comprenant la rotation de l'information d'image de 180°, afin d'inverser l'information d'image de telle sorte que les informations d'image dans la zone du poste d'appel et dans la zone d'information transmise ont la même orientation, même lorsque la zone d'information contenant l'information transmise par ledit utilisateur est transmise en sens inverse au niveau du poste d'appel.

12. Procédé selon la revendication 10 ou 11, comprenant l'affichage de l'information concernant le poste d'appel et l'information transmise qui a tourné, sous la forme d'une seule image.

13. Procédé selon la revendication 11, comprenant la rotation de l'information concernant le poste d'appel ainsi que de l'information transmise, de 180°, lorsqu'à la fois l'information concernant le poste d'appel et l'information transmise de la transmission de télécopie sont affichées en sens inverse, puis l'affichage de l'image qui a tourné.

14. Procédé selon la revendication 10, consistant à conduire l'information transmise, stockée dans le moyen (7) formant mémoire, à être affichée sous la forme d'une page à un certain instant et à conduire une page affichée à être copiée sans changement dans un nouveau fichier dudit moyen (7) formant mémoire en réponse à une commande de copie, ou à conduire au moins une partie d'une page affichée d'information transmise à être inversée avant le stockage de la page de ladite information transmise dans le nouveau fichier, en réponse à une commande de copie inversée.

15. Procédé selon la revendication 10, comprenant en outre la sélection d'une zone d'une page affichée et la rotation de l'information d'image dans la zone sélectionnée de la page affichée.
